# EUROPEAN PATENT APPLICATION

(11) **EP 4 458 443 A1**
(43) Date of publication of application: **06.11.2024**
(21) Application number: 22914127.0
(22) Date of filing: 08.12.2022
(51) Int. Cl.: B01D 15/00, B01D 33/00, C22B 26/12

(54) **LITHIUM EXTRACTION APPARATUS AND LITHIUM EXTRACTION METHOD**

(30) Priority: 31.12.2021 CN 202111682549
(71) Applicant: BYD Company Limited, Shenzhen, Guangdong 518118 (CN)
(72) Inventor: LIN, Hongye, Shenzhen, Guangdong 518118 (CN); WEI, Jialiang, Shenzhen, Guangdong 518118 (CN); LIAN, Junlan, Shenzhen, Guangdong 518118 (CN)
(74) Representative: Gulde & Partner
(86) International application number: PCT/CN2022/137457
(87) International publication number: WO 2023/124872

(57) **Abstract**

A lithium extraction apparatus and a lithium extraction method are provided. The lithium extraction apparatus includes a frame (2) and a transmission mesh belt (1). The transmission mesh belt (1) is installed on the frame (2), the transmission mesh belt (1) has water permeable holes, and the transmission mesh belt (1) is configured to carry an adsorbent. The frame (2) is sequentially provided with an adsorption zone (21) and a desorption zone (22) along a traveling direction of the transmission mesh belt (1). A brine spraying device (211) is arranged above the transmission mesh belt (1) in the adsorption zone (21). A desorbing liquid spraying device (221) is arranged above the transmission mesh belt (1) in the desorption zone (22). A lithium extract collecting device (222) is arranged below the transmission mesh belt (1) in the desorption zone (22). The transmission mesh belt (1) in the adsorption zone (21) is folded into a multi-layer structure in the vertical direction; and/or the transmission mesh belt (1) in the desorption zone (22) is folded into a multi-layer structure in the vertical direction.

## Description

### CROSS-REFERENCE TO RELATED APPLICATIONS

The present disclosure claims priority to and benefits of Chinese Patent Application No. 202111682549.X, filed on December 31, 2021 and entitled "LITHIUM EXTRACTION APPARATUS AND LITHIUM EXTRACTION METHOD", which is incorporated herein by reference in its entirety.

### FIELD

The present disclosure relates to the technical field of lithium extraction process from brine or seawater, and specifically, to a lithium extraction apparatus and a lithium extraction method.

### BACKGROUND

Existing lithium extraction methods from brine include precipitation, calcination-leaching, solvent extraction, membrane separation, and adsorption. Adsorption has the advantages of simple process, environmental protection and so on. However, the existing adsorption method has the problems of many production equipment, complex process, low utilization rate of adsorbent, high production cost and low lithium extraction rate, thus reducing the resource utilization, and being not conducive to the development of new energy industry.

### SUMMARY

To solve the above problems, the present disclosure provides a lithium extraction apparatus, which greatly improves the utilization of adsorbent through layered reactions, thereby increasing the extraction rate of lithium. The apparatus is simple, and has a high degree of automation, and a low production cost, which are beneficial to its use in the extraction of lithium from brine.

In a first aspect, an embodiment of the present disclosure provides a lithium extraction apparatus, which includes a frame and a transmission mesh belt installed on the frame. The transmission mesh belt has water permeable holes, and configured to carry an adsorbent. The frame is sequentially provided with an adsorption zone and a desorption zone along a traveling direction of the transmission mesh belt. A brine spraying device is arranged above the transmission mesh belt in the adsorption zone. A desorbing liquid spraying device is arranged above the transmission mesh belt in the desorption zone. A lithium extract collecting device is arranged below the transmission mesh belt in the desorption zone. The transmission mesh belt in the adsorption zone is folded into a multi-layer structure in the vertical direction, an input end of the transmission mesh belt in the adsorption zone is far away from the brine spraying device, and an output end of the transmission mesh belt in the adsorption zone is close to the brine spraying device; and/or the transmission mesh belt in the desorption zone is folded into a multi-layer structure in the vertical direction, an input end of the transmission mesh belt in the desorption zone is far away from the desorbing liquid spraying device, and an output end of the transmission mesh belt in the desorption zone is close to the desorbing liquid spraying device.

Optionally, in the adsorption zone, the multi-layer structure has 2 to 8 layers; and/or in the desorption zone, the multi-layer structure has 2 to 8 layers.

Optionally, the transmission mesh belt moves towards the brine spraying device layer by layer in the adsorption zone; and/or the transmission mesh belt moves towards the desorbing liquid spraying device layer by layer in the desorption zone.

Optionally, the distance between layers of the multi-layer structure in the adsorption zone is from 0.05 m to 0.3 m; and/or the distance between layers of the multi-layer structure in the desorption zone is from 0.05 m to 0.3 m.

Optionally, a brine collecting device is arranged below the transmission mesh belt in the adsorption zone.

Optionally, the transmission mesh belt has a baffle mechanism therein that turns the flow of the liquid, and the baffle mechanism has an internal space accommodating the adsorbent.

Optionally, the lithium extraction apparatus further includes a water-permeable filter detachably fixed to a surface of the transmission mesh belt.

Optionally, the water-permeable filter is of a mesh bag structure, the water-permeable filter has a space accommodating the adsorbent, and the water-permeable filter is fixed on the surface of the transmission mesh belt.

Optionally, the brine spraying device is provided with a nozzle, including a sprinkling nozzles and a jet nozzle.

Optionally, the desorbing liquid spraying device is provided with a nozzle, including a sprinkling nozzles and a jet nozzle.

Optionally, the frame is also provided with a rinsing zone along the traveling direction of the transmission mesh belt, where the rinsing zone is located between the adsorption zone and the desorption zone, and a rinsing liquid spraying device is arranged above the transmission mesh belt in the rinsing zone.

Optionally, a rinsing liquid collecting device is arranged below the transmission mesh belt in the rinsing zone.

Optionally, the frame is further provided with a regeneration zone, where an input end of the transmission mesh belt in the regeneration zone corresponds to the output end of the transmission mesh belt in the desorption zone, an output end of the transmission mesh belt in the regeneration zone corresponds to the input end of the transmission mesh belt in the adsorption zone, and a regeneration liquid spraying device is arranged above the transmission mesh belt in the regeneration zone.

Optionally, a regeneration liquid collecting device is arranged below the transmission mesh belt in the regeneration zone.

The lithium extraction apparatus provided in the first aspect of the present disclosure can effectively improve the adsorption and/or desorption efficiency of an adsorbent through layered reactions, thus reducing the lithium extraction time. Moreover, the apparatus is simple, occupies less floor space, and has a high degree of automation, which facilitates the wide scope of use.

In a second aspect, the present disclosure provides a lithium extraction method, using the lithium extraction apparatus as described in the first aspect. The method includes the following steps. The transmission mesh belt is moved, to contact the adsorbent with brine in the adsorption zone to obtain a lithium-containing adsorbent; and to contact the lithium-containing adsorbent with a desorbing liquid in the desorption zone, to obtain a lithium extract.

Optionally, the weight of lithium ions adsorbed by per gram of the adsorbent per hour is greater than or equal to 9 mg; and the weight of lithium ions desorbed from per gram of the lithium containing adsorbent per hour is greater than or equal to 9 mg.

Optionally, the adsorbent includes one or more of a manganese-based lithium ion sieve and a titanium-based lithium ion sieve.

Optionally, the average particle size of the adsorbent is 200 µm to 1 mm.

Optionally, the desorbing liquid includes an inorganic acid solution.

Optionally, the desorbing liquid further includes potassium ferrate.

Optionally, the desorbing liquid further includes a hypochlorite.

Optionally, the desorbing liquid includes a hypochlorite, potassium ferrate and an inorganic acid, where the concentration of the hypochlorite is 1 g/L to 10 g/L, the concentration of potassium ferrate is 1 g/L to 10g/L, and the concentration of the inorganic acid is 3 g/L to 20 g/L.

### BRIEF DESCRIPTION OF THE DRAWINGS

FIG. 1 is a schematic structural diagram of a lithium extraction apparatus provided in an embodiment of the present disclosure;
FIG. 2 is a schematic structural diagram of a lithium extraction apparatus provided in an embodiment of the present disclosure;
FIG. 3 is a schematic structural diagram of a lithium extraction apparatus provided in an embodiment of the present disclosure;
FIG. 4 is a schematic structural diagram of a lithium extraction apparatus provided in an embodiment of the present disclosure;
FIG. 5 is a schematic structural diagram of a lithium extraction apparatus provided in an embodiment of the present disclosure;
FIG. 6 is a schematic structural diagram of a lithium extraction apparatus provided in an embodiment of the present disclosure;
FIG. 7 is a schematic structural diagram of a lithium extraction apparatus provided in an embodiment of the present disclosure;
FIG. 8 is a schematic local structural diagram of a lithium extraction apparatus provided in an embodiment of the present disclosure;
FIG. 9 is a schematic structural diagram of a transmission mesh belt provided in an embodiment of the present disclosure; and
FIG. 10 is a schematic structural diagram of a transmission mesh belt provided in Comparative Example A of the present disclosure.

In the drawings, 1. transmission mesh belt 11. water permeable filter 12. baffle mechanism 2. frame 21. adsorption zone 211. brine spraying device 212. brine collecting device 22. desorption zone 221. desorbing liquid spraying device 222. lithium extract collecting device 23. rinsing zone 231. rinsing liquid spraying device 232. rinsing liquid collecting device 24. regeneration zone 241. regeneration liquid spraying device 242. regeneration liquid collecting device

### DETAILED DESCRIPTION

The technical solutions in the embodiments of the present disclosure are clearly and completely described below with reference to the accompanying drawings in the embodiments of the present disclosure. Apparently, the described embodiments are merely some of the embodiments of the present disclosure rather than all of the embodiments. All other embodiments obtained by a person of ordinary skill in the art based on the embodiments of the present disclosure without creative efforts shall fall within the protection scope of the present disclosure.

At present, to ensure that the adsorbent is fully contacted with the brine, a column separation method or stirring method is often used in the existing process of extracting lithium by adsorption. The column separation method is to feed brine into an adsorption column filled with an adsorbent, and then rinse and desorb the adsorption column. The stirring method is to stir the brine and adsorbent together, then filter out the adsorbent, and rinse and desorb the adsorbent. The above methods require many equipment, and have complex process, high production cost, low utilization of the adsorbent, limited extraction of lithium in brine, and excessive resource consumption, being not conducive to the development of the industry. Therefore, the present disclosure provides a lithium extraction apparatus, in which a transmission mesh belt is designed to have a multi-layer structure to enable the repeated use of the adsorbent, thereby improving the utilization rate of the adsorbent and the extraction rate of lithium, and greatly reducing the cost of the product. The present disclosure promotes the development of the lithium extraction process in the industry.

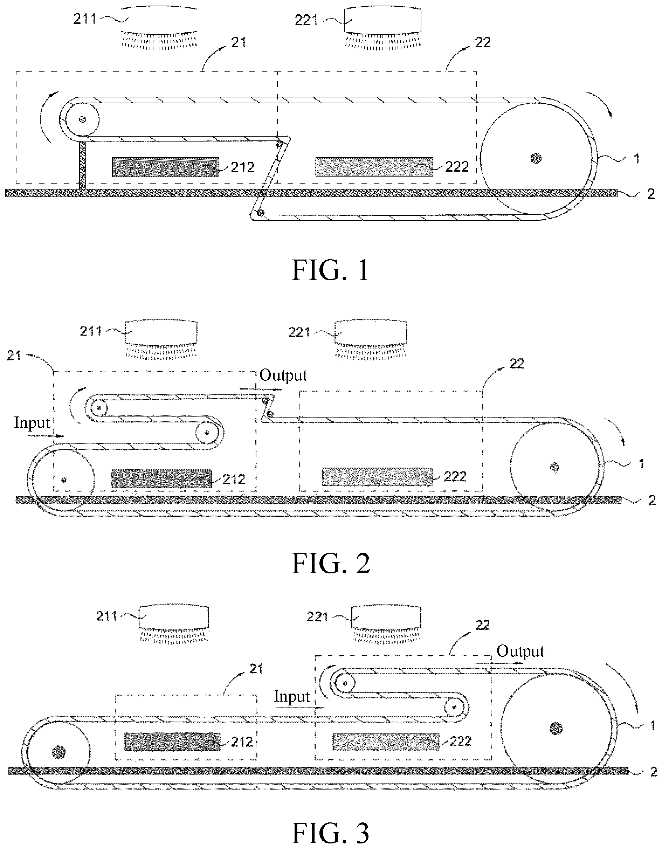

FIG. 1 is a schematic structural diagram of a lithium extraction apparatus provided in an embodiment of the present disclosure. Referring to FIG. 1, a lithium extraction apparatus of the present disclosure includes a frame 2 and a transmission mesh belt 1 installed on the frame 2. The transmission mesh belt is configured to carry the adsorbent. The frame 2 includes an adsorption zone 21 and a desorption zone 22. A brine spraying device 211 is arranged above the transmission mesh belt in adsorption zone 21. When the brine flows out from the brine spraying device 211 and is sprayed to the transmission mesh belt in the adsorption zone 21, the brine contacts the adsorbent in the transmission mesh belt. Lithium ions in the brine is adsorbed by the adsorbent in the adsorption zone 21 to obtain an adsorbent with lithium ions, that is, a lithium containing adsorbent. The lithium containing adsorbent moves together with the transmission mesh belt to the desorption zone 22. A desorbing liquid spraying device 221 is arranged above the transmission mesh belt in the desorption zone 22; and a lithium extract collecting device 222 is arranged below the transmission mesh belt in the desorption zone 22. When the desorbing liquid flows out from the desorbing liquid spraying device and is sprayed to the transmission mesh belt in the desorption zone, the desorbing liquid contacts the lithium-containing adsorbent in the transmission mesh belt. Lithium ions in the lithium containing adsorbent is eluted off by the desorbing liquid, to obtain a lithium extract. The transmission mesh belt 1 is provided with a plurality of water permeable holes, and the lithium extract can flow down through the permeable holes of the transmission mesh belt 1, and enter the lithium extract collecting device 222 below the transmission mesh belt. Thus, the process of extracting lithium from brine is completed.

In some embodiments of the present disclosure, a brine collecting device 212 is arranged below the transmission mesh belt in the adsorption zone 21. The brine collecting device is configured to receive the post-adsorption liquid flowing out of the transmission mesh belt in the adsorption zone, where the collected post-adsorption liquid can be returned to the brine collecting device for secondary extraction or recovery of other materials, to enhance the resource utilization. In some embodiments of the present disclosure, an output end of the transmission mesh belt in the desorption zone corresponds to the input end of the transmission mesh belt in adsorption zone. The lithium containing adsorbent can be removed of lithium ions in the desorption zone and configured to adsorb lithium ions again, that is, the lithium containing adsorbent is regenerated into an adsorbent. The regenerated adsorbent can move together with the transmission mesh belt to the adsorption zone of the lithium extraction apparatus, to realize the recycled use.

In the present disclosure, for the purpose of improving the utilization of adsorbent to allow the adsorbent to fully adsorb the lithium ions in the brine or the desorbing liquid to fully elute the lithium ions in the lithium containing adsorbent, the transmission mesh belt in the lithium extraction apparatus adopts a multi-layer structure. In some embodiments, the transmission mesh belt in the adsorption zone is folded into a multi-layer structure in the vertical direction. FIG. 2 is a schematic structural diagram of a lithium extraction apparatus provided in an embodiment of the present disclosure. In FIG. 2, the transmission mesh belt in the adsorption zone 21 is folded into a multi-layer structure in the vertical direction. The transmission mesh belt in the adsorption zone 21 includes opposite input and output ends, where the input end of the transmission mesh belt in the adsorption zone 21 is far away from the brine spraying device 211, and the output end of the transmission mesh belt in the adsorption zone 21 is close to the brine spraying device 211. The transmission mesh belt is folded into 3 layers, that is, the multi-layer structure is a 3-layer structure. The three-layer structure of the transmission mesh belt in the adsorption zone is named, from bottom to top, a first adsorption layer, a second adsorption layer and a third adsorption layer, respectively. An input end of the first adsorption layer is the input end of the transmission mesh belt in the adsorption zone 21, an output end of the first adsorption layer corresponds to an input end of the second adsorption layer, an output end of the second adsorption layer corresponds to an input end of the third adsorption layer, and an output end of the third adsorption layer is the output end of the transmission mesh belt in the adsorption zone 21. During the operation of the lithium extraction apparatus, the transmission mesh belt moves upward layer by layer in the adsorption zone. That is, the transmission mesh belt moves towards the brine spraying device 211 layer by layer in the adsorption zone. The brine flows out from the brine spraying device 211 and flows downward, to realize the countercurrent grading adsorption, and thus greatly improve the extraction rate of lithium in brine. For the convenience of explaining the principles of the present disclosure, description will be made hereinafter with respect to the brine and adsorbent, respectively. It is to be noted that the description below is made with reference to the structure of the lithium extraction apparatus in FIG. 2. However, in the following description, the number of layers in the multilayer structure of the transmission mesh belt in the adsorption zone is not particularly limited, and the technical effect of the present disclosure can be achieved as long as the number of folded layers of the transmission mesh belt in the adsorption zone is greater than or equal to 2 layers. For a transmission mesh belt formed with a multilayer structure with a different number of layers, a first adsorption layer hereinafter can be understood as the transmission mesh belt farthest from the brine spraying device in the adsorption zone, and a third adsorption layer can be understood as the transmission mesh belt closest to the brine spraying device in the adsorption zone.

For the adsorbent, an input end of the first adsorption layer is the input end of the transmission mesh belt in the adsorption zone, and an output end of the third adsorption layer is the output end of the transmission mesh belt in the adsorption zone. It can be understood that less lithium ions are adsorbed by the adsorbent in the first adsorption layer, and more lithium ions are adsorbed by the adsorbent in the third adsorption layer. Therefore, the adsorbent in the first adsorption layer has a high adsorption capacity for lithium ions, the adsorption capacity of the adsorbent in the second adsorption layer is smaller than that of the adsorbent in the first adsorption layer, and the adsorption capacity of the adsorbent in the third adsorption layer is smaller than that of the adsorbent in the second adsorption layer. Since the adsorption capacity of the adsorbent gradually decreases from the first adsorption layer to the third adsorption layer, the adsorption efficiency of the adsorbent from the first adsorption layer to the third adsorption layer deteriorates for the same concentration of brine. Therefore, to maintain a high adsorption efficiency, the concentration of brine needs to be increased.

For brine, the brine first flows to the transmission mesh belt in the adsorption zone closest to the brine spraying device, that is, the third adsorption layer. The adsorbent in the third adsorption layer adsorbs lithium ions in brine, so the concentration of lithium ions in brine is reduced. The brine in the third adsorption layer flows downward under the action of gravity, and flows out from the water permeable holes of the transmission mesh belt and to the second adsorption layer. After the brine is adsorbed by the adsorbent in the second adsorption layer, the concentration of lithium ions is reduced again. Then the brine flows to the first adsorption layer. After the brine is adsorbed in the first adsorption layer, lithium in the brine is extracted largely, and the remaining post-adsorption liquid flows out from the first adsorption layer and into the brine collecting device. It can be understood that during the lithium extraction process, the concentration of brine in the third adsorption layer is greater than the concentration of brine in the second adsorption layer, which is in turn greater than the concentration of brine in the first adsorption layer.

During the operation of the lithium extraction apparatus, the adsorbent in the first adsorption layer has a high adsorption capacity, and the brine adsorbed by the adsorbent in the first adsorption layer is the brine having low lithium ion concentration that has been absorbed by the preceding two adsorption layers, so the adsorbent can fully extract lithium ions in brine, thus greatly reducing the concentration of lithium ions in the post-adsorption liquid. The adsorbent in the first adsorption layer will move to the second adsorption layer with the movement of the transmission mesh belt. The concentration of brine in the second adsorption layer is higher than that in the first adsorption layer, so the adsorbent can continue to adsorb lithium ions. After adsorbing lithium ions in the brine, the adsorbent in the second adsorption layer further moves to the third adsorption layer with the transmission mesh belt and adsorbs the brine in the third adsorption layer. After the adsorption by the adsorbent in the third adsorption layer is completed, it moves away from the adsorption zone with the movement of the transmission mesh belt.

As can be seen, in the lithium extraction apparatus of the present disclosure, the transmission mesh belt in the adsorption zone is arranged to have a multi-layer structure, to achieve the multiple adsorption by the adsorbent, thereby greatly improving the utilization rate of the adsorbent, and allowing the adsorbent to absorb as much lithium ions in the brine as possible. Thus, the extraction rate of lithium in the brine is improved.

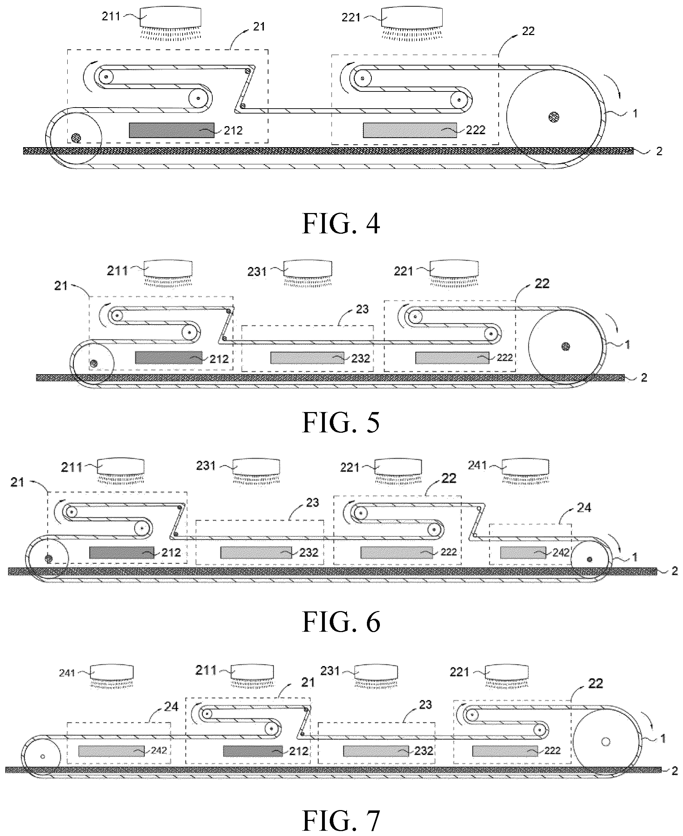

In some embodiments of the present disclosure, the multi-layer structure of the transmission mesh belt in the adsorption zone has 2 to 8 layers. In the adsorption zone, the multi-layer structure specifically includes, without limitation, 2, 3, 4, 5, 6, 7 or 8 layers. A schematic structural diagram of a transmission mesh belt with a 2-layer structure in the adsorption zone is shown in FIG. 1. A schematic structural diagram of a transmission mesh belt with a 3-layer structure in the adsorption zone is shown in FIG. 2. FIG. 4, FIG. 5, FIG. 6 and FIG. 7. When the number of layers of the transmission mesh belt in the adsorption zone is controlled within the above range, the adsorbent in the adsorption zone has high efficiency in adsorbing lithium ions, the apparatus can operate efficiently, and the production cost of the apparatus is low. In some embodiments of the present disclosure, in the adsorption zone, the multi-layer transmission mesh belt includes 3 to 6 layers. It is to be noted that in the present disclosure, the transmission mesh belt in the adsorption zone refers to the transmission mesh belt located between the brine spraying device and the brine collecting device. Since the transmission mesh belt is an integrated loop structure, to clearly show the structure of the lithium extraction apparatus, the transmission mesh belt is also shown in an area below the frame in the drawings of the present disclosure, and the transmission mesh belt in this area only indicates that the transmission mesh belt is an integral structure, and can move circularly. However, this area is not a working area of the lithium extraction apparatus, that is, the transmission mesh belt in this area is not included in the multi-layer structure.

In some embodiments of the present disclosure, the distance between layers of the multi-layer mesh belt in the adsorption zone is from 0.05 m to 0.3 m. When the distance between layers of the multi-layer mesh belt is controlled within the range of 0.05 m to 0.3 m, the flow rate of brine between layers is moderate to facilitate the brine to penetrate into the adsorbent evenly, and the apparatus can also operate efficiently.

In an embodiment of the present disclosure, a lithium containing adsorbent is obtained after the adsorbent adsorbs lithium ions in the adsorption zone, and then the lithium containing adsorbent moves to the desorption zone with the transmission mesh belt, where the desorbing liquid is brought into contact with the lithium containing adsorbent to elute off lithium ions in the lithium containing adsorbent. The lithium ions enter the desorbing liquid, to obtain a lithium extract. The lithium extract then flows into the lithium extract collecting device through the water permeable holes of the transmission mesh belt. To improve the desorption efficiency of the lithium containing adsorbent in the desorption zone, in some embodiments of the present disclosure, the transmission mesh belt in the desorption zone is vertically folded into a multi-layer structure. FIG. 3 is a schematic structural diagram of a lithium extraction apparatus provided in an embodiment of the present disclosure. In Fig. 3, the transmission mesh belt in the desorption zone 22 is folded into a multi-layer structure in the vertical direction. The transmission mesh belt in the desorption zone 22 includes opposite input and output ends, where the input end of the transmission mesh belt in the desorption zone is far away from the desorbing liquid spraying device 221, and the output end of the transmission mesh belt in the desorption zone is close to the desorbing liquid spraying device 221. The multi-layer structure of the transmission mesh belt in the desorption zone includes 3 layers, which are named, from bottom to top, a first desorption layer, a second desorption layer and a third desorption layer. An input end of the first desorption layer is the input end of the transmission mesh belt in the desorption zone, an output end of the first desorption layer corresponds to an input end of the second desorption layer, an output end of the second desorption layer corresponds to an input end of the third desorption layer, and an output end of the third desorption layer is the output end of the transmission mesh belt in the desorption zone. The movement directions of adjacent desorption layers are opposite. During the operation of the lithium extraction apparatus, the transmission mesh belt moves upward layer by layer in the desorption zone, that is, the transmission mesh belt moves towards the desorbing liquid spraying device 221 layer by layer in the desorption zone. The desorbing liquid flows out from the desorbing liquid spraying device, and flows downward, to realize the countercurrent grading desorption, and greatly improve the desorption rate of lithium in the adsorbent. For the convenience of explaining the principle of the desorption process, description will be made hereinafter with respect to the desorbing liquid and the lithium-containing adsorbent, respectively. It is to be noted that the description below is made with reference to the structure of the lithium extraction apparatus in FIG. 3. However, in the following description, the number of layers in the multilayer structure of the transmission mesh belt in the desorption zone is not particularly limited, and the technical effect of the present disclosure can be achieved as long as the number of folded layers of the transmission mesh belt in the desorption zone is greater than or equal to 2 layers. For a transmission mesh belt formed with a multilayer structure with a different number of layers, a first desorption layer hereinafter can be understood as the transmission mesh belt farthest from the desorbing liquid spraying device in the desorption zone, and a third desorption layer can be understood as the transmission mesh belt closest to the desorbing liquid spraying device in the desorption zone.

For the lithium containing adsorbent, an input end of the first desorption layer is the input end of the transmission mesh belt in the desorption zone, and an output end of the third desorption layer is the output end of the transmission mesh belt in the desorption zone. It can be understood that more lithium ions are adsorbed by the lithium containing adsorbent in the first desorption layer; and less lithium ions are adsorbed by the lithium containing adsorbent in third desorption layer, so the lithium ions in the lithium containing adsorbent in the first desorption layer are likely to be eluted off, and the lithium containing adsorbent has a high desorption capacity. The desorption capacity of the lithium containing adsorbent in the second desorption layer is smaller than that of the lithium containing adsorbent in the first desorption layer, and the desorption capacity of the lithium containing adsorbent in the third desorption layer is smaller than that of the lithium containing adsorbent in the second desorption layer. Since the desorption capacity of the lithium containing adsorbent gradually decreases from the first desorption layer to the third desorption layer, the desorption efficiency of the lithium containing adsorbent from the first desorption layer to the third desorption layer will decrease for the same concentration of desorbing liquid. Therefore, to maintain a high desorption efficiency, the concentration of the desorbing liquid needs to be increased.

For the desorbing liquid, the desorbing liquid first flows to the transmission mesh belt closest to the desorbing liquid spraying device in the desorption zone, that is, the third desorption layer. The lithium ions in the lithium containing adsorbent is displaced under the action of the desorbing liquid in the third desorption layer, so the concentration of hydrogen ions in the desorbing liquid decreases, and the concentration of lithium ions increases. The desorbing liquid in the third desorption layer flows downward under the action of gravity, and flows out from the water permeable holes of the transmission mesh belt and to the second desorption layer. The desorbing liquid interacts with the lithium containing adsorbent in the second desorption layer, so the concentration of hydrogen ions in the desorbing liquid further decreases, and the concentration of lithium ions increases again. Then, the desorbing liquid flows to the first desorption layer, and the lithium containing adsorbent in the first desorption layer is desorbed under the action of the desorbing liquid. After the desorption by the desorbing liquid in first desorption layer is completed, a lithium extract is obtained. The lithium extract then flows into the lithium extract collecting device through the water permeable holes of the transmission mesh belt. It can be understood that during the lithium extraction process, the hydrogen ion concentration in the desorbing liquid in the third desorption layer is greater than the hydrogen ion concentration in the desorbing liquid in the second desorption layer, which is in turn greater than the hydrogen ion concentration in the desorbing liquid in the first desorption layer.

During the operation of the lithium extraction apparatus, due to the high lithium content in the lithium containing adsorbent in the first desorption layer, the lithium ions can be easily eluted off. The desorbing liquid in the first desorption layer is the desorbing liquid that has passed through the previous two desorption zones, so the concentration of hydrogen ions in the desorbing liquid is low. The desorbing liquid can preliminarily extract the lithium ions in the lithium containing adsorbent. The lithium containing adsorbent in the first desorption layer will move to the second desorption layer with the movement of the transmission mesh belt. The concentration of hydrogen ions in the desorbing liquid in the second desorption layer is higher than that in the first desorption layer, so the lithium ions in the lithium containing adsorbent are further displaced, and the desorption capacity of the lithium containing adsorbent decreases. The lithium containing adsorbent in the second desorption layer then moves to the third desorption layer with the movement of the transmission mesh belt. The lithium containing adsorbent in the third desorption layer has a low desorption capacity; however, the desorbing liquid in the third desorption layer has a high hydrogen ion concentration. The desorbing liquid has a high capacity to displace lithium ions in the lithium containing adsorbent, thereby greatly reducing the remaining lithium in the lithium containing adsorbent, and achieving the sufficient extraction of lithium. After the desorption of the lithium containing adsorbent in the third desorption layer is completed, the regeneration is accomplished, to form a regenerated adsorbent. The regenerated adsorbent moves away from the desorption zone with the movement of the transmission mesh belt.

As can be seen, in the lithium extraction apparatus of the present disclosure, the transmission mesh belt in the desorption zone is arranged to have a multi-layer structure, to achieve the multiple desorption of the lithium containing adsorbent, thereby greatly improving the utilization of the desorbing liquid and the adsorbent and eluting the lithium ions in the lithium containing adsorbent off into the desorbing liquid as much as possible. In this way, the lithium ions in the lithium containing adsorbent is fully extracted, and the lithium ion concentration in the lithium extract is increased. Moreover, the structure can also reduce the amounts of the desorbing liquid and the adsorbent, decrease the desorption time, and lower the manufacturing cost.

In some embodiments of the present disclosure, the transmission mesh belt in the desorption zone is vertically folded into a multi-layer structure, and the multi-layer structure has 2 to 8 layers. In the desorption zone, the transmission mesh belt specifically includes, without limitation, 2, 3, 4, 5, 6, 7 or 8 layers. When the number of layers of the transmission mesh belt in the desorption zone is controlled within the above range, the efficiency of desorbing lithium ions from the lithium containing adsorbent in the desorption zone is high, the apparatus can operate with low energy consumption and high efficiency, and the production cost of the apparatus is low. In some embodiments of the present disclosure, the transmission mesh belt in the desorption zone includes 3 to 6 layers. It is to be noted that in the present disclosure, the transmission mesh belt in the desorption zone refers to the transmission mesh belt located between the desorbing liquid spraying device and the lithium extract collecting device.

In some embodiments of the present disclosure, the distance between layers of the multi-layer mesh belt in the desorption zone is from 0.05 m to 0.3 m. When the distance between layers of the multi-layer mesh belt in the desorption zone is controlled within the range of 0.05 m to 0.3 m, the flow rate of the desorbing liquid between layers is moderate, to facilitate the desorbing liquid to penetrate into the lithium containing adsorbent evenly, and the apparatus can also operate efficiently.

In some embodiments of the present disclosure, the transmission mesh belt in the adsorption zone is folded into a multi-layer structure in the vertical direction, where an input end of the transmission mesh belt in the adsorption zone is far away from the brine spraying device, and an output end of the transmission mesh belt in the adsorption zone is close the brine spraying device; and the transmission mesh belt in the desorption zone is vertically folded into a multi-layer structure, where an input end of the transmission mesh belt in the desorption zone is far away from the desorbing liquid spraying device, and an output end of the transmission mesh belt in the desorption zone is close to the desorbing liquid spraying device. FIG. 4 is a schematic structural diagram of a lithium extraction apparatus provided in an embodiment of the present disclosure. In FIG. 4, the transmission mesh belt has a multilayer structure in both the adsorption zone 21 and the desorption zone 22. When the transmission mesh belt has a multilayer structure in both the adsorption zone and the desorption zone, the adsorbent in the transmission mesh belt in the adsorption zone can fully adsorb lithium ions in the brine, the obtained lithium containing adsorbent has a higher lithium content, and the lithium containing adsorbent in the desorption zone can also achieve full desorption of lithium ions and full regeneration of the adsorbent, so as to improve the utilization of the adsorbent, allow the entire lithium extraction process to have high adsorption and desorption efficiency, reduce the production cost, and improve the extraction rate of lithium in brine.

In some embodiments of the present disclosure, the frame is also provided with a rinsing zone along the traveling direction of the transmission mesh belt, where the rinsing zone is located between the adsorption zone and desorption zone, and a rinsing liquid spraying device is arranged above the transmission mesh belt in the rinsing zone. In some embodiments of the present disclosure, a rinsing liquid collecting device is arranged below the transmission mesh belt in the rinsing zone. In some embodiments of the present disclosure, the rising liquid includes water. During the operation of the lithium extraction apparatus, the adsorbent is in contact with brine, and some impurities in brine will also adhere to the adsorbent surface. The arrangement of the rinsing zone can remove the impurities in the absorbent before lithium in the lithium containing adsorbent is extracted, so that the impurity content in the lithium extract obtained in the subsequent desorption process is reduced. FIG. 5 is a schematic structural diagram of a lithium extraction apparatus provided in an embodiment of the present disclosure. In FIG. 5, the frame is provided with an adsorption zone 21, a rinsing zone 23 and a desorption zone 22 in sequence along the traveling direction of the transmission mesh belt. A rinsing liquid spraying device 231 is arranged above the transmission mesh belt in the rinsing zone 23, and a rinsing liquid collecting device 232 is arranged below the transmission mesh belt in the rinsing zone 23.

In some embodiments of the present disclosure, the rinsing zone includes multiple rinsing sections arranged in sequence along the traveling direction of the transmission mesh belt. A rinsing liquid spraying device is arranged above the transmission mesh belt in each rising section, and a rinsing liquid collecting device is arranged below the transmission mesh belt in each rising section. In adjacent rising sections, a rinsing liquid collecting device located in a downstream rinsing section is communicated with a rinsing liquid spraying device located in an upstream rinsing section. That is, the rising liquid used in the upstream rinsing section is a liquid recovered after rinsing in the downstream rinsing section. In some embodiments, the rinsing zone includes a first rinsing section, a second rinsing section and a third rinsing section arranged in sequence along the traveling direction of the transmission mesh belt. The third rinsing section is close to the desorption zone, where water is used as a rising liquid in the third rinsing section, a first washing effluent is collected by the rinsing liquid collecting device in the third rinsing section, and the first washing effluent flows to the rinsing liquid spraying device in the second rinsing section. The first washing effluent is used as a rising liquid in the second rinsing section, a second washing effluent is collected by the rinsing liquid collecting device in the second rinsing section, and the second washing effluent flows to the rinsing liquid spraying device in the first rinsing section. The second washing effluent is used as a rising liquid in the first rinsing section. With such a gradient design, the lithium containing adsorbent is brought into contact with rinsing liquids with increasingly higher water content along the traveling direction of the transmission mesh belt, and the washing effect is becoming better and better, so as to effectively remove the impurities in the lithium containing adsorbent, and save water.

In some embodiments of the present disclosure, the working area further includes a regeneration zone, where an input end of the transmission mesh belt in the regeneration zone corresponds to the output end of the transmission mesh belt in the desorption zone, an output end of the transmission mesh belt in the regeneration zone corresponds to the input end of the transmission mesh belt in the adsorption zone, and a regeneration liquid spraying device is arranged above the transmission mesh belt in the regeneration zone. The lithium containing adsorbent is brought into contact with the desorbing liquid in the desorption zone, and the lithium ions in the lithium containing adsorbent is replaced by the hydrogen ions in the desorbing liquid, to achieve the lithium extraction. After the lithium containing adsorbent is desorbed to remove lithium ions, it can absorb lithium ions again. That is, it is regenerated. After the regenerated adsorbent moves away from the desorption zone with the transmission mesh belt, there will be more hydrogen ions left in the regenerated adsorbent. A too high acidity of the regenerated adsorbent will affect the adsorption effect of regenerated adsorbent for brine, which is not conducive to the reuse of the adsorbent. In the present disclosure, the hydrogen ions in the regenerated adsorbent can be diluted or neutralized by setting the regeneration zone at the output end of the desorption zone, which contributes to the regeneration of the adsorbent, and ensures that the regenerated adsorbent can be effectively used by fully absorbing lithium ions. In some embodiments of the present disclosure, a regeneration liquid collecting device is further arranged below the transmission mesh belt in the regeneration zone. In some embodiments of the present disclosure, the regeneration liquid includes at least one of water or a basic solution.

In some embodiments of the present disclosure, the regeneration zone is provided after the desorption zone, that is, the regeneration zone is located at the side of the desorption zone away from the adsorption zone. FIG. 6 is a schematic structural diagram of a lithium extraction apparatus provided in an embodiment of the present disclosure. In FIG. 6, the frame is provided with an adsorption zone 21, a rinsing zone 23 a desorption zone 22 and a regeneration zone 24 in sequence along the traveling direction of the transmission mesh belt, where a regeneration liquid spraying device 241 is arranged above the transmission mesh belt in the regeneration zone 24, and a regeneration liquid collecting device 242 is further arranged below the transmission mesh belt in the regeneration zone 24. In some embodiments of the present disclosure, the regeneration zone is provided before the adsorption zone, that is, the regeneration zone is located at the side of the adsorption zone away from the desorption zone. FIG. 7 is a schematic structural diagram of a lithium extraction apparatus provided in an embodiment of the present disclosure. In FIG. 7, the frame is provided with a regeneration zone 24, an adsorption zone 21, a rinsing zone 23 and a desorption zone 22 in sequence along the traveling direction of the transmission mesh belt, where a regeneration liquid spraying device 241 is arranged above the transmission mesh belt in the regeneration zone 24, and a regeneration liquid collecting device 242 is further arranged below the transmission mesh belt in the regeneration zone 24.

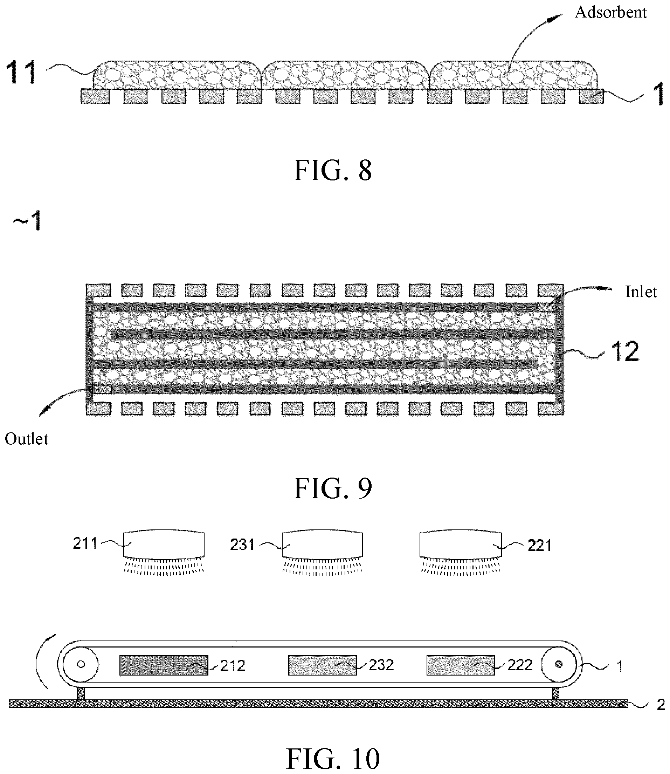

In some embodiments of the present disclosure, the lithium extraction apparatus further comprises a water-permeable filter detachably fixed to a surface of the transmission mesh belt. The water permeable filter is configured to fix the adsorbent to the surface of the transmission mesh belt. In some embodiments, the water permeable filter is covered on the upper and lower surfaces of the transmission mesh belt, and the adsorbent is filled in the water permeable filter. In some embodiments, the water permeable filter is of a mesh bag structure, the water permeable filter has a space accommodating the adsorbent, and the water permeable filter is fixed to the surface of the transmission mesh belt. FIG. 8 is a schematic partial structural diagram of a lithium extraction apparatus provided in an embodiment of the present disclosure. In FIG. 8, the transmission mesh belt 1 is provided with a plurality of water permeable filters 11 on the surface, and the adsorbent is accommodated in the water permeable filter. When the transmission mesh belt moves, the water permeable filter 11 will move with the transmission mesh belt 1, such that the adsorbent moves through the adsorption zone and the desorption zone in sequence, to complete the entire lithium extraction process. When one round of adsorption and desorption of the adsorbent is completed, the water permeable filter may or may not be removed from the surface of the transmission mesh belt to renew the adsorbent, and then the adsorbent undergoes adsorption and desorption again.

In some embodiments of the present disclosure, the transmission mesh belt has a baffle mechanism therein that turns the flow of the liquid, and the baffle mechanism has an internal space accommodating the adsorbent. FIG. 9 is a schematic structural diagram of a transmission mesh belt provided in an embodiment of the present disclosure. In FIG. 9, a baffle mechanism 12 is provided inside the transmission mesh belt 1, and the adsorbent can be filled in the baffle mechanism 12. During the operation of the lithium extraction apparatus, the liquid (any one of brine, rising liquid or desorbing liquid) flows downward into the transmission mesh belt through the water permeable holes on the surface of the transmission mesh belt, and enters the baffle mechanism through an entrance of the baffle mechanism 12. The liquid flows tortuously in the baffle mechanism, thereby increasing the contact time of the liquid with the adsorbent, and improving the extraction rate of lithium ions in brine in the adsorption zone, the removal rate of impurities in the lithium containing adsorbent in the rinsing zone, the extraction rate of lithium ions in the desorption zone and the neutralization rate of hydrogen ions in the adsorbent in the regeneration zone. In some embodiments, to prevent the adsorbent in the baffle mechanism from falling out of the transmission mesh belt, a water permeable filter is provided at the entrance and exit of the baffle mechanism, and the water permeable filter can block the adsorbent, to retain the adsorbent in the baffle mechanism.

In the lithium extraction apparatus provided in the present disclosure, the transmission mesh belt in the adsorption zone and/or the desorption zone is designed to have a multi-layer structure, the efficiency of the adsorbent adsorbing lithium ions and/or the lithium containing adsorbent desorbing lithium ions is greatly improved, thereby shortening the time of the lithium extraction process; and the apparatus is simple in structure and occupies less floor space, which facilitates the wide scope of use.

The present disclosure provides a lithium extraction method using a lithium extraction apparatus of the present disclosure. The method includes the following steps.

The transmission mesh belt is moved, to contact the adsorbent with brine in the adsorption zone to obtain a lithium-containing adsorbent; and to contact the lithium-containing adsorbent with a desorbing liquid in the desorption zone, to obtain a lithium extract.

In some embodiments of the present disclosure, the weight of lithium ions adsorbed by per gram of the adsorbent per hour is greater than or equal to 9 mg. That is, the rate of the adsorbent adsorbing lithium ions is greater than or equal to 9 mg/g/h. The rate of the adsorbent adsorbing lithium ions can be specifically, but not limited to, 9 mg/g/h, 12 mg/g/h, 15 mg/g/h, 20 mg/g/h, 30 mg/g/h or 50 mg/g/h. With increasing rate of the adsorbent adsorbing lithium ions, the time for the adsorbent to adsorb lithium ions from the brine is reduced, and more brine can be processed per unit time. The greater amount of lithium extracted is more conducive to the improvement of the production efficiency. In some embodiments of the present disclosure, the weight of lithium ions desorbed from per gram of the lithium containing adsorbent per hour is greater than or equal to 9 mg. That is, the rate of the lithium containing adsorbent desorbing lithium ions is greater than or equal to 9 mg/g/h. The rate of the lithium containing adsorbent desorbing lithium ions can be specifically, but not limited to, 9 mg/g/h, 12 mg/g/h, 15 mg/g/h, 20 mg/g/h, 30 mg/g/h or 50 mg/g/h. With increasing rate of the lithium containing adsorbent desorbing lithium ions, the time for desorbing lithium ions from the lithium containing adsorbent is reduced, more lithium extract can be obtained per unit time. The greater amount of lithium extracted is more conducive to the improvement of the production efficiency.

In some embodiments of the present disclosure, the adsorbent comprises one or more of a manganese-based lithium ion sieve and a titanium-based lithium ion sieve. The manganese-based lithium ion sieve and titanium-based lithium ion sieve have high adsorption and desorption rates, and short adsorption and desorption time, thus shortening the production time. In some embodiments of the present disclosure, the adsorbent includes a metatitanate-type lithium ion sieve adsorbent. In some embodiments of the present disclosure, the adsorbent includes a spinel-type manganese oxide. The spinel-type manganese oxide has good selectivity for lithium ions, thus reducing the content of impurities in the lithium extract, and improving the extraction rate of lithium.

In an embodiment of the present disclosure, the desorbing liquid comprises an acid solution, which may be an organic acid solution, or an inorganic acid solution. In some embodiments of the present disclosure, the desorbing liquid includes an inorganic acid, including one or more of sulfuric acid, hydrochloric acid, and nitric acid. In some embodiments of the present disclosure, the concentration of the inorganic acid in the desorbing liquid is 3 g/L-20 g/L. The concentration of the inorganic acid in the desorbing liquid can be specifically, without limitation, 3 g/L, 5 g/L, 8 g/L, 10 g/L, 13 g/L, 15 g/L or 20 g/L.

In some embodiments of the present disclosure, the adsorbent includes a manganese-based lithium ion sieve, and the desorbing liquid includes an acid solution and potassium ferrate. Potassium ferrate has strong oxidizability, and can inhibit the disproportionation reaction of tetravalent manganese ions in the manganese-based lithium ion sieve, thus reducing the dissolution loss of manganese, and improving the cycle performance and service life of the adsorbent. In some embodiments of the present disclosure, the concentration of potassium ferrate in the desorbing liquid is 1 g/L-10 g/L. The concentration of potassium ferrate in the desorbing liquid can be specifically, without limitation, 1 g/L, 3 g/L, 5 g/L, 7 g/L or 10 g/L. In some embodiments of the present disclosure, the adsorbent includes a manganese-based lithium ion sieve, and the desorbing liquid includes an acid solution and a hypochlorite. The dissolution loss of the manganese-based lithium ion sieve can also be reduced by adding a hypochlorite to the desorbing liquid. In some embodiments of the present disclosure, the concentration of the hypochlorite in the desorbing liquid is 1 g/L-10 g/L. The concentration of the hypochlorite in the desorbing liquid can be specifically, without limitation, 1 g/L, 3 g/L, 5 g/L, 7 g/L or 10 g/L. In some embodiments of the present disclosure, the adsorbent includes a manganese-based lithium ion sieve, and the desorbing liquid comprises an acid solution, a hypochlorite and potassium ferrate. In some embodiments of the present disclosure, after one round of adsorption and desorption of the adsorbent is completed in the lithium extraction apparatus, the dissolution loss of the adsorbent is less than 0.05%. During the lithium extraction process, potassium ferrate in the desorbing liquid will enter the lithium extract, the iron impurities produced by potassium ferrate can be removed by adjusting the pH of the lithium extract to precipitate iron ions into ferric hydroxide, so they will not affect the subsequent lithium extraction process.

Embodiments of the present disclosure will be further described below with reference to specific examples.

### Example 1

A lithium extraction process using a lithium extraction apparatus having a structure as shown in FIG. 5 is provided. The adsorbent used in the lithium extraction process includes a spinel-type manganese oxide. The concentration of each component used in the desorbing liquid includes: 7 g/L of sulfuric acid, 4 g/L of potassium ferrate, and 5 g/L of sodium hypochlorite.

### Example 2

Example 2 differs from Example 1 in that the lithium extraction apparatus has a different structure. The structure of the lithium extraction apparatus used in Example 2 is shown in FIG. 2.

### Example 3

Example 3 differs from Example 1 in that the lithium extraction apparatus has a different structure. The structure of the lithium extraction apparatus used in Example 3 is shown in FIG. 3.

### Example 4

Example 4 differs from Example 1 in that the ingredients in the desorbing liquid are different. The concentration of each component in the desorbing liquid in Example 4 includes: 7 g/L of sulfuric acid, and 5 g/L of sodium hypochlorite.

### Comparative Example A

Comparative Example A differs from Example 1 in that the lithium extraction apparatus has a different structure. The adsorption zone and desorption zone of the lithium extraction apparatus in Comparative Example A both have a single-layer structure. The structure of the lithium extraction apparatus used in Comparative Example A is shown in FIG. 10. FIG. 10 is a schematic structural diagram of a transmission mesh belt provided in Comparative Example A of the present disclosure.

### Effect Examples

To verify the effect of the lithium extraction apparatus and lithium extraction process of the present disclosure, effect examples are provided in the present disclosure. In the effect example, brine with the following ingredients is used. The specific composition of the brine is shown in Table 1.

**Table 1. Concentration of various ions in brine**

| Elements/Ions | Content (%) |
|---|---|
| B | 0.0133 |
| Ca | 0.2970 |
| Li | 0.0138 |
| Mg | 7.0719 |
| Na | 0.2325 |
| K | 0.6241 |
| Chloride (Cl⁻) | 22.7497 |
| Sulfate (SO₄²⁻) | 0.0577 |

Lithium is extracted from the brine according to the following process.

The brine spraying device is opened, and a lithium containing adsorbent is obtained after the brine is adsorbed by the adsorbent. The lithium containing adsorbent is rinsed with water in the rinsing zone, and then fed to the desorption zone, where lithium ions in the lithium containing adsorbent is eluted off by the desorbing liquid, to obtain a lithium extract.

The contents of lithium and manganese in the lithium extraction solution are determined. The test results are shown in Table 2.

**Table 2. Contents of lithium and manganese in lithium extract**

| Experimental group | Lithium (mg/L) | Manganese (mg/L) |
|---|---|---|
| Example 1 | 450 | 2 |
| Example 2 | 203 | 1 |
| Example 3 | 187 | 4 |
| Example 4 | 440 | 262 |
| Comparative Example A | 122 | 106 |

It can be seen from Table 2 that the transmission mesh belt in the adsorption zone and desorption zone of the lithium extraction apparatus in Example 1 both have a multi-layer structure, and the content of lithium in the obtained lithium extract is greater than that in the lithium extracts obtained in Example 2 and Example 3. The transmission mesh belt in the adsorption zone of the lithium extraction apparatus in Example 2 has a multi-layer structure, the transmission mesh belt in the desorption zone has a single-layer structure, and the content of lithium in the lithium extract is greater than that in the lithium extract in Comparative Example A. The transmission mesh belt in the desorption zone of the lithium extraction apparatus in Example 3 has a multi-layer structure, the transmission mesh belt in the adsorption zone has a single-layer structure, and the content of lithium in the lithium extract is greater than that in the lithium extract in Comparative Example A. It can be seen that the lithium extraction apparatus provided in the present disclosure can effectively improve the extraction rate of lithium in brine.

As can be seen from Example 4 and Example 1, an appropriate amount of potassium ferrate is added in the desorbing liquid in Example 1, to reduce the dissolution loss of the manganese adsorbent, thereby improving the cycle performance and service life of the adsorbent, reducing the number of replacements of the adsorbent, simplifying the process, and realizing highly automatic lithium extraction.

The foregoing embodiments only describe implementations of the present disclosure, which are described specifically and in detail, but cannot be construed as a limitation to the patent scope of the present disclosure. It should be noted that for a person of ordinary skill in the art, several variations and improvements can be made without departing from the designed idea of the present disclosure. These variations and improvements belong to the protection scope of the present disclosure. Therefore, the protection scope of the present disclosure is defined by the appended claims.

## Claims

1. A lithium extraction apparatus, comprising:
a frame (2); and
a transmission mesh belt (1) installed on the frame, the transmission mesh belt (1) having water permeable holes, and the transmission mesh belt (1) being configured to carry an adsorbent; the frame (2) being sequentially provided with an adsorption zone (21) and a desorption zone (22) along a traveling direction of the transmission mesh belt (1), a brine spraying device (211) being arranged above the transmission mesh belt (1) in the adsorption zone (21), a desorbing liquid spraying device (221) being arranged above the transmission mesh belt (1) in the desorption zone (22), and a lithium extract collecting device (222) being arranged below the transmission mesh belt (1) in the desorption zone (22);
the transmission mesh belt (1) in the adsorption zone (21) being folded into a multi-layer structure in the vertical direction, an input end of the transmission mesh belt (1) in the adsorption zone (21) being far away from the brine spraying device (211), and an output end of the transmission mesh belt (1) in the adsorption zone (21) being close to the brine spraying device (211); and/or the transmission mesh belt (1) in the desorption zone (22) being folded into a multi-layer structure in the vertical direction, an input end of the transmission mesh belt (1) in the desorption zone (22) being far away from the desorbing liquid spraying device (221), and an output end of the transmission mesh belt (1) in the desorption zone (22) being close to the desorbing liquid spraying device (221).

2. The lithium extraction apparatus according to claim 1, wherein in the adsorption zone (21), the multi-layer structure has 2 to 8 layers; and/or in the desorption zone (22), the multi-layer structure has 2 to 8 layers.

3. The lithium extraction apparatus according to claim 1 or 2, wherein the transmission mesh belt (1) moves towards the brine spraying device (211) layer by layer in the adsorption zone (21); and/or the transmission mesh belt (1) moves towards the desorbing liquid spraying device (221) layer by layer in the desorption zone (22).

4. The lithium extraction apparatus according to any one of claims 1 to 3, wherein the distance between layers of the multi-layer structure in the adsorption zone (21) is from 0.05 m to 0.3 m; and/or the distance between layers of the multi-layer structure in the desorption zone (22) is from 0.05 m to 0.3 m.

5. The lithium extraction apparatus according to any one of claims 1 to 4, wherein a brine collecting device (212) is arranged below the transmission mesh belt (1) in the adsorption zone (21).

6. The lithium extraction apparatus according to any one of claims 1 to 5, wherein the transmission mesh belt (1) has a baffle mechanism (12) therein that turns the flow of the liquid, and the baffle mechanism (12) has an internal space accommodating the adsorbent.

7. The lithium extraction apparatus according to any one of claims 1 to 6, further comprising a water-permeable filter (11) detachably fixed to a surface of the transmission mesh belt (1).

8. The lithium extraction apparatus according to claim 7, wherein the water-permeable filter (11) is of a mesh bag structure, the water-permeable filter (11) has a space accommodating the adsorbent, and the water-permeable filter (11) is fixed on the surface of the transmission mesh belt (1).

9. The lithium extraction apparatus according to any one of claims 1 to 8, wherein the frame (2) is also provided with a rinsing zone (23) along the traveling direction of the transmission mesh belt (1), the rinsing zone (23) is located between the adsorption zone (21) and the desorption zone (22), and a rinsing liquid spraying device (231) is arranged above the transmission mesh belt (1) in the rinsing zone (23).

10. The lithium extraction apparatus according to claim 9, wherein a rinsing liquid collecting device (232) is arranged below the transmission mesh belt (1) in the rinsing zone (23).

11. The lithium extraction apparatus according to any one of claims 1 to 10, wherein the frame (2) is further provided with a regeneration zone (24), an input end of the transmission mesh belt (1) in the regeneration zone (24) corresponds to the output end of the transmission mesh belt (1) in the desorption zone (22), an output end of the transmission mesh belt (1) in the regeneration zone (24) corresponds to the input end of the transmission mesh belt (1) in the adsorption zone (21), and a regeneration liquid spraying device (241) is arranged above the transmission mesh belt (1) in the regeneration zone (24).

12. The lithium extraction apparatus according to claim 11, wherein a regeneration liquid collecting device (242) is further arranged below the transmission mesh belt (1) in the regeneration zone (24).

13. A lithium extraction method, applied to the lithium extraction apparatus according to any one of claims 1 to 12, the method comprising: moving the transmission mesh belt, to contact the adsorbent with brine in the adsorption zone to obtain a lithium-containing adsorbent; and to contact the lithium-containing adsorbent with a desorbing liquid in the desorption zone, to obtain a lithium extract.

14. The method according to claim 13, wherein the weight of lithium ions adsorbed by per gram of the adsorbent per hour is greater than or equal to 9 mg; and the weight of lithium ions desorbed from per gram of the lithium containing adsorbent per hour is greater than or equal to 9 mg.

15. The method according to claim 13 or 14, wherein the adsorbent comprises one or more of a manganese-based lithium ion sieve and a titanium-based lithium ion sieve.

16. The method according to any one of claims 13 to 15, wherein the average particle size of the adsorbent is 200 µm to 1 mm.

17. The method according to any one of claims 13 to 16, wherein the desorbing liquid comprises an acid solution.

18. The method according to claim 17, wherein the desorbing liquid further comprises potassium ferrate.

19. The method according to claim 17 or 18, wherein the desorbing liquid further comprises a hypochlorite.

20. The method according to any one of claims 17 to 19, wherein the desorbing liquid comprises a hypochlorite, potassium ferrate and an inorganic acid, wherein the concentration of the hypochlorite is 1 g/L to 10 g/L, the concentration of potassium ferrate is 1 g/L to 10g/L, and the concentration of the inorganic acid is 3 g/L to 20 g/L.
